# EUROPÄISCHE PATENTSCHRIFT

(11) **EP 2 032 394 B1**
(45) Veröffentlichungstag und Bekanntmachung des Hinweises auf die Patenterteilung: **01.10.2014**
(21) Anmeldenummer: 07726138.6
(22) Anmeldetag: 23.06.2007
(51) Int. Cl.: B60R 13/08

(54) **STRUKTURBAUTEIL, INSBESONDERE ABSCHIRMTEIL IN FORM EINES HITZESCHILDES**
STRUCTURAL COMPONENT, IN PARTICULAR SHIELDING ELEMENT IN THE FORM OF A HEAT SHIELD
COMPOSANT DE STRUCTURE, NOTAMMENT PARTIE DE PROTECTION SOUS FORME D'ÉCRAN THERMIQUE

(30) Priorität: 24.06.2006 DE 102006029087
(43) Veröffentlichungstag der Anmeldung: 11.03.2009
(73) Patentinhaber: ElringKlinger AG, 72581 Dettingen (DE)
(72) Erfinder: ZIKA-BEYERLEIN, Beate, 90482 Nürnberg (DE); LANG, Markus, 92318 Neuweiler (DE)
(74) Vertreter: nospat Patent- und Rechtsanwälte GbR
(86) Internationale Anmeldenummer: PCT/EP2007/005554
(87) Internationale Veröffentlichungsnummer: WO 2007/147631

(56) Entgegenhaltungen:
- DE-A1- 2 620 774
- DE-A1- 19 939 482
- DE-U1- 9 202 228

## Beschreibung

Die Erfindung bezieht sich auf ein Strukturbauteil, insbesondere Abschirmteil in Form eines Hitzeschildes, mit einem Schirmkörper, der ein Formteil aufweist, das eine Schirmfläche bildet, die ein abzuschirmendes Bauteil zumindest teilweise umgibt, wobei der Schirmkörper ein zweites Formteil aufweist, das eine weitere Schirmfläche bildet, wobei beide Formteile jeweils die Form einer flachen Schale haben, die mindestens einen Abstandsraum mit vorgebbaren lichten Weiten begrenzen.

Während die Wärmeentwicklung beispielsweise eines sparsamen leistungsoptimierten Dieselmotors am Zylinderkopf oder Kurbelwellengehäuse sehr gering sein kann, gilt das für "heiße Zonen", wie bei Krümmer, Turbolader, Katalysator etc. keineswegs. Durch die immer kompaktere Konstruktion der Motoren geraten zunehmend Komponenten in enge Nachbarschaft, die thermisch nicht "kompatibel" sind. Demgemäß ist es notwendig, mit Abschirmteilen, wie Hitzeschilden, thermische Motorenkomponenten gegenüber benachbarten, wärmeempfindlichen Aggregaten, wie Sensoren, Kraftstoffleitungen, Druckdosen, Karosserieteilen etc., zu schützen. Die Situation wird durch den Kompaktbau auch insofern verschärft, als die hohe Pakkungsdichte der Aggregate den kühlenden Luftstrom im Motorraum einengt. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. An die wärmedämmende Wirkung von Abschirmteilen wie Hitzeschilden sind daher hohe Anforderungen zu stellen. Eine Ursache für die wachsende Bedeutung von Hitzeschilden ist auch der Trend zum Einsatz von Thermoplasten, die sich wegen ihrer hervorragenden Formbarkeit, ihrem leichten Gewicht und ihrer Wirtschaftlichkeit im Motorraum zusehends durchsetzen. Solche Werkstoffe erfordern aber ein besonderes Augenmerk im Hinblick auf die Umgebungstemperaturen am Einsatzort.

Im Hinblick auf diese Problematik ist es Stand der Technik, Abschirmteile, wie Hitzeschilder, wenn sie an kritischen Einsatzorten Verwendung finden sollen, in besonders aufwendiger Bauweise zu gestalten. So ist es beispielsweise bekannt, an besonders kritischen Stellen der Abschirmteile eine zusätzliche Belüftung vorzusehen, um mittels gezielter Luftströmung, örtlich gezielt, eine verstärkte Wärmekonvektion herbeizuführen. Gezielte Luftströmungen können beispielsweise durch die Ausnutzung in der Art eines Kamineffektes herbeigeführt werden. So zeigt die DE 43 00 817 A1 eine Hitzeschildlösung, bestehend aus randseitig durchgehend medienundurchlässig verbundenen Endrändern zweier Hitzeschirmkörper, wobei zwischen den beiden derart undurchlässig miteinander verbundenen Formteilen als Schirmkörper sich mehrere Abstandsräume erstrecken mit unterschiedlich vorgebbaren lichten Weiten, die von durchgehend rippenartig verlaufenden Stegen begrenzt sind, zwischen denen wiederum zumindest teilweise kegelartige Erhöhungen sich erstrecken, die vergleichbar einem Vulkankegel die gesammelte Wärme im Abstandsraum unter Ausnutzung des Kamineffektes in die Umgebung abstrahlen sollen. Neben dieser bekannten Ausnutzung eines Kamineffektes unter Einsatz von Luftleitblechen kommen im Stand der Technik auch aktive Einrichtungen hierfür zum Einsatz, indem man beispielsweise mittels Absaugung einen Heißluftentzug erzeugt. Bei allen solchen Lösungsansätzen kommt es jedoch zu erheblichen Mehrkosten und häufig sind derartige Lösungen auch aufgrund des damit einhergehenden vermehrten Platzbedarfs vielfach nicht durchführbar. Ein weiterer Nachteil besteht darin, dass bei Belüftung mittels gezielter Luftströmung (Kamineffekt) die Gefahr der Überhitzung anderer, normalerweise unbeteiligter Bauteile durch den erzeugten Heißluftstrom gegeben ist.

Um diese Nachteile zu vermeiden, ist es auch bekannt, das den Schirmkörper bildende Formteil in einem mehrlagigen Aufbau vorzusehen, wobei an einer ersten metallischen Lage, die die der Wärmequelle zugewandte eigentliche Abschirmfläche bildet, eine oder mehrere Isolier- und/oder Abschirmlagen vorzusehen, die wiederum von zumindest einer metallischen Decklage eingefaßt sind. So ist ein Abschirmteil mit mehrlagigem Aufbau und mit einer Vielzahl an Formteilen durch die DE 32 15 244 A1 bekannt, wobei bereits aufgrund dieses Mehrlagenaufbaues mit einem erhöhten Herstellaufwand in fertigungstechnischer Sicht zu rechnen ist.

Durch das Gebrauchsmuster DE 87 00 918 U1 ist ein gattungsgemäßes Strukturbauteil, insbesondere Abschirmteil, in Form eines Hitzeschildes bekannt, mit einem Schirmkörper, der ein Formteil aufweist, das eine Schirmfläche bildet, die ein abzuschirmendes Bauteil zumindest teilweise umgibt, wobei der Schirmkörper ein zweites Formteil aufweist, das eine weitere Schirmfläche bildet, wobei beide Formteile jeweils die Form einer flachen Schale haben, die mindestens einen Abstandsraum mit vorgebbaren lichten Weiten begrenzen. Bei der bekannten Lösung sind wiederum die beiden Formteile endseitig nach allen Richtungen hin in mediendichter, insbesonderer fluiddichter Weise fest miteinander verbunden und eine günstige konvektive Wärmeabfuhr wird über eine komplexe Topographie, bezogen auf die Schirmkörper der Formteile, erreicht, und der insoweit erzielte komplexe Strukturaufbau mit einer Vielzahl an infinitesimal erzeugten kastenförmigen Teilräumen bewirkt auch insoweit eine sehr gute schallabsorbierende Wirkung; allein auch hier kann es bereits aufgrund der kastenförmigen Vorsprünge zu der bereits beschriebenen unerwünschten Kaminwirkung mit der Möglichkeit der partiellen Überhitzung kommen und im übrigen ist die bekannte Hitzeschildlösung konstruktiv aufwendig in der Real isierung.

Durch die DE 26 20 774 A1 (Lösung nach den Fig. 3 und 4) ist es bekannt, eine Verbrennungskraftmaschine eines Fahrzeuges mit einem ersten Strukturbauteil zu kammern, das aus mehreren Formteilen zusammengesetzt einen ersten Schirmkörper bildet, der die Verbrennungskraftmaschine allseits umfassend sich von der Fahrzeugvorderseite mit einer Kühleinrichtung bis zu einem Kardangelenk des Abtriebsstranges im rückseitig angeordneten Bereich einer Fahrerkabine des Fahrzeugs erstreckt. Über eine separate Kühlluftführung wird die derart gekammerte Verbrennungskraftmaschine nebst Abtriebsstrang von der Fahrluft beim Fahrbetrieb des Fahrzeugs gekühlt.

Des weiteren weist die bekannte Abschirmlösung als weiteres eigenständiges Strukturbauteil und von dem ersten Strukturbauteil mit seinem mehrteiligen Schirmkörper getrennt einen weiteren Schirmkörper mit einem Formteil auf, das den Boden der Fahrerkabine bildet und das zumindest teilweise in der Art einer Formschale unter Beibehalten eines Abstandsraumes mit vorgebbarer, lichter Weite ein schalenförmiges Formteil des ersten Schirmkörpers umgibt, das im zylinderkopfseitigen Bereich der Verbrennungskraftmaschine angeordnet ist. In einem Längsschnitt durch die dahingehende, voneinander getrennte Schirmkörperanordnung erweitert sich in Fahrtrichtung gesehen die lichte Weite des Abstandsraumes zwischen den benachbart angeordneten Formteilen der beiden Schirmkörper von einem vorderseitigen Bereich der Fahrerkabine ausgehend in Richtung zu ihrem rückwärtigen Bereich. Aufgrund der mehrteiligen Schirmkörperanordnung mit ihren einzelnen, voneinander verschiedenen Formteilen sind verschiedenste, eigenständige Strukturbauteile realisiert, die sinnfällig am Fahrzeug anzubringen sind, was konstruktiv aufwendig und mithin teuer in der Realisierung ist.

Im Hinblick auf diesen Stand der Technik liegt der Erfindung die Aufgabe zugrunde, ein Strukturbauteil, insbesondere Abschirmteil, in Form eines Hitzeschildes zur Verfügung zu stellen, das in einfacher und kostengünstiger Weise herstellbar ist und sich durch eine besonders gute Dämmwirkung bezogen auf Hitze- und/oder Körperschalleinwirkung auszeichnet und insoweit auch in thermisch hoch belasteten Regionen den zu stellenden Anforderungen vollumfänglich gerecht wird.

Erfindungsgemäß ist diese Aufgabe durch ein Strukturbauteil gelöst, das die Merkmale des Patentanspruches 1 in seiner Gesamtheit aufweist.

Danach besteht die Besonderheit der Erfindung darin, dass nach dem kennzeichnenden Teil des Patentanspruches 1 zumindest teilweise im Bereich der voneinander beabstandeten Enden der Formteile die jeweilige lichte Weite des Abstandsraumes unterschiedlich ist, der insoweit in die Umgebung des Strukturbauteils ausmündet. Während beim Stand der Technik ein den Schirmkörper bildendes Formteil bei Bedarf, d.h. wenn in thermisch hoch belasteten Zonen eine besonders gute Dämmwirkung erforderlich ist, durch eine Sandwich-Konstruktion mehrlagig gestaltet ist, besteht das Grundprinzip der Erfindung demgegenüber darin, dass neben einer Verdoppelung einfach gestalteter Formteile, also beispielsweise gebildet aus einem einlagigen Metallblech, zwischen denen sich ein Luftraum als Abstandsraum befindet, die erforderliche verstärkte Dämmwirkung dadurch erreicht wird, dass aufgrund der unterschiedlichen lichten Weiten in insoweit gegenüber der Umgebung durchgängig geöffneten Endbereichen, die insoweit durch die Formteile begrenzt luftführend miteinander in Verbindung stehen, eine Art Durchzugseffekt erreicht wird und es zu einer guten wärmeabführenden Zirkulation zwischen den Formteilen als Schirmkörper des Hitzeschildes kommt, ohne dass jedoch sich dergestalt ein unerwünschter Kamineffekt mit den schädigenden Überhitzungen einstellen könnte.

Es ist für einen Durchschnittsfachmann auf dem Gebiet der Hitzeschildtechnologie überraschend, dass er aufgrund der unterschiedlichen lichten Weiten bezogen auf die freien Öffnungsquerschnitte begrenzt durch die Formteile des Strukturbauteils eine Durchzugscharakteristik wie bei einem Kamin erhält, ohne jedoch die ansonsten damit einhergehenden negativen Überhitzungserscheinungen in Kauf nehmen zu müssen, wie sie bei Hitzeschildlösungen auftreten, bei denen die jeweiligen Formteile randseitig mediendicht abschließend miteinander fest verbunden sind.

Je nach den Gegebenheiten am Einsatzort kann die Verdoppelung vollflächig vorgesehen sein, wobei sich die Schirmfläche des zweiten Formteiles im wesentlichen über den gesamten Flächenbereich der Schirmfläche des ersten Formteiles erstreckt, oder die Anordnung kann alternativ so getroffen sein, dass sich die Schirmfläche des zweiten Formteiles lediglich über einen besonders hochbelasteten Teilflächenbereich der Schirmfläche des ersten Formteiles erstreckt.

Somit kann dank der Erfindung eine partielle oder vollflächige stärkere Abschirmwirkung mittels eines Strukturbauteiles erzielt werden, das kostengünstig und in automatisiertem Herstellungsverfahren gefertigt werden kann.

Eine besonders gute Dämmwirkung in besonders kritischen, hochbelasteten Regionen lässt sich durch ein Ausführungsbeispiel gewährleisten, bei dem die in der zu den Schirmflächen normalen Richtung gemessene lichte Weite des Abstandsraumes in unterschiedlichen Flächenbereichen unterschiedlich groß bemessen ist. Dadurch entsteht zwischen den Formteilen ein örtlich unterschiedlich dickes Luftpolster, so dass sich eine regional unterschiedliche Dämmwirkung erreichen lässt.

Bei vorteilhaften Ausführungsbeispielen können die lichten Weiten des Abstandsraumes im Bereich von 2 bis 12 mm, vorzugsweise von 2,5 bis 5 mm liegen.

Vorzugsweise ist das die größere Schirmfläche bildende erste Formteil als das dem abzuschirmenden Bauteil näher liegende Formteil vorgesehen.

Bei einer vorteilhaften Ausführungsform, die sich insbesondere als verhältnismäßig großflächige Abschirmung an Abgaskrümmern eignet, kann das erste Formteil die Form einer flachen Schale mit einer Längserstreckung, mit zwei parallelen, längsverlaufenden Seitenrändern, einem diese an einem Ende verbindenden Endrand und mit diesem Endrand entgegengesetzten Wandteilen besitzen, die zur Bodenfläche der Schale bevorzugt im wesentlichen senkrecht stehen. Bei einer solchen, in der Art eines Brustpanzers einer Rüstung gestalteten Schalenbauweise kann das der Wärmequelle ferner liegende zweite Formteile das erste Formteil von Seitenrand zu Seitenrand durchgehend übergreifen.

Je nach dem, ob eine vollflächige Verdoppelung oder partielle Verdoppelung der Schirmflächen vorgesehen ist, kann die Längserstreckung des zweiten Formteiles gleich der Längserstreckung des ersten Formteiles oder geringer als diejenige des ersten Formteiles sein, wobei im letzteren Fall das zweite Formteil am ersten Formteil so angebracht sein kann, dass dieses im Bereich des Endrandes und des dazu entgegengesetzten Endes frei liegt.

Dabei ist die Anordnung bevorzugt so getroffen sein, dass die lichte Weite des Abstandsraumes an demjenigen Ende den Größtwert besitzt, welches dem die senkrechten Wandteile aufweisenden Ende des ersten Formteiles benachbart ist. Bei dieser Gestaltung ist die Gefahr der unerwünschten Kaminwirkung durch das Vorhandensein der zur Bodenfläche der Schale senkrechten Wandteile weiter verringert, und zwar insbesondere dann, wenn der Abstandsraum so gestaltet ist, dass sich seine lichte Weite in Richtung auf dessen dem Endrand des ersten Formteiles benachbartes Ende hin abnimmt und an diesem Ende den Kleinstwert besitzt. Hierbei endet der Abstandsraum in einem schmalen, endseitigen Spalt.

Um einen Zugang für Zusatzeinrichtungen zu den abgeschirmten Bauteilen zu ermöglichen, können erstes und zweites Formteil miteinander fluchtende Öffnungen an den in Frage kommenden Stellen aufweisen. Nachstehend ist die Erfindung anhand eines in der Zeichnung dargestellten Ausführungsbeispieles im Einzelnen erläutert.

Es zeigen:
- Fig. 1: eine perspektivische Schrägansicht eines Ausführungsbeispieles des erfindungsgemäßen Strukturbauteiles in Form eines Hitzeschildes für die Abschirmung eines Abgaskrümmers;
- Fig. 2: eine der Fig. 1 entsprechende perspektivische Schrägansicht des Ausführungsbeispieles, jedoch gesehen auf den Endrand, der dem in Fig. 1 gezeigten Ende entgegengesetzt ist, und
- Fig. 3: eine Schnittdarstellung entsprechend der Linie III-III in Fig. 2.

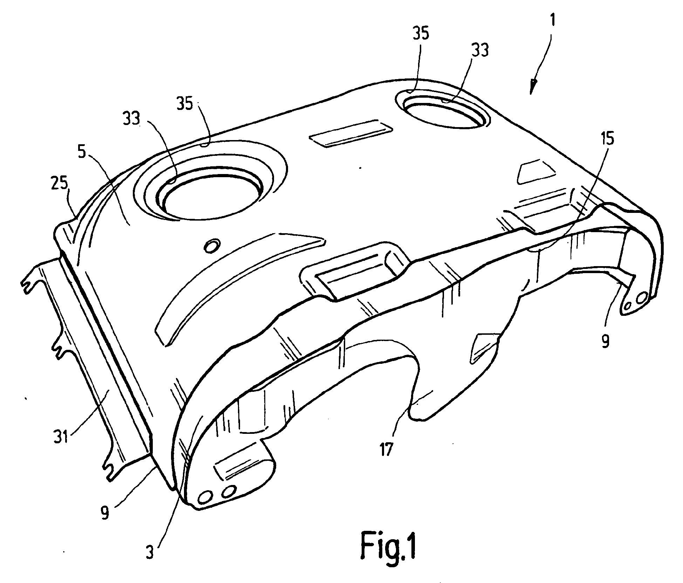

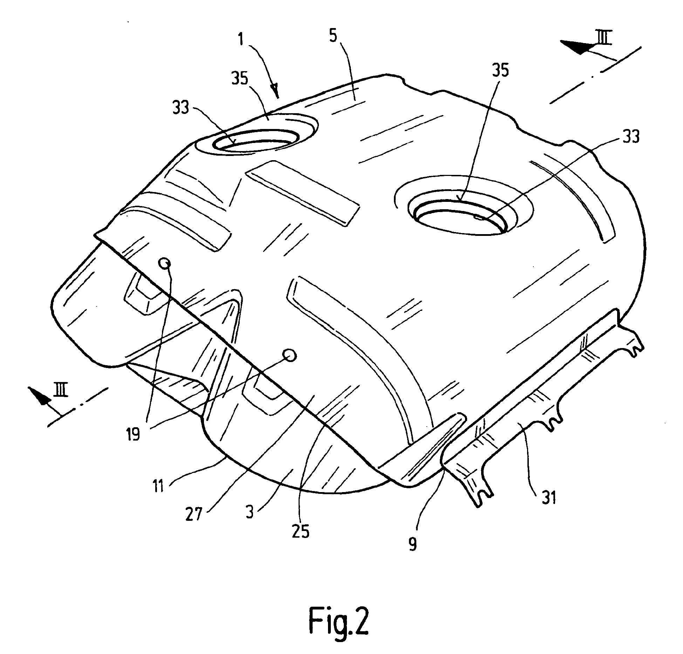

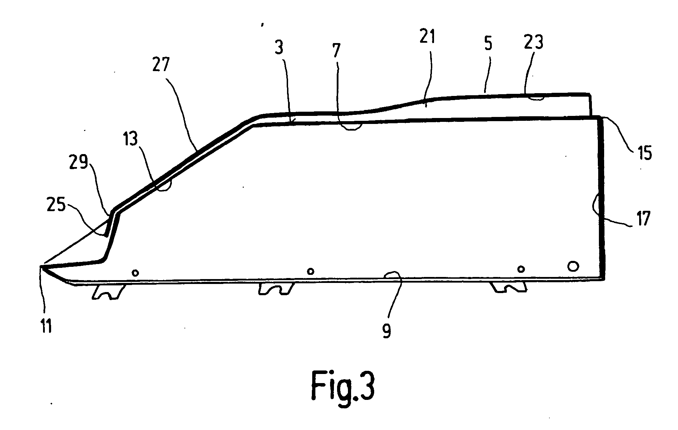

Die Figuren zeigen ein Ausführungsbeispiel des erfindungsgemäßen Strukturbauteiles in Form eines Hitzeschildes mit einem als Ganzes mit 1 bezeichneten Schirmkörper, der aus einem ersten Formteil 3 und einem zweiten Formteil 5 gebildet ist. Beide Formteile 3 und 5 sind einteilig aus einem Edelstahlblech durch Pressen geformt. Insbesondere sind diese aus Werkstoffen bzw. aus einem mehrlagigen Materialverbund aufgebaut, wie man sie in der Fachwelt unter der Bezeichnung "Elrotherm ML" kennt. Wie der Vergleich der Figuren 1 und 2 mit der Schnittdarstellung von Fig. 3 erkennen lässt, hat das erste Formteil 3 im großen Ganzen die Form einer verhältnismäßig flachen Schale, deren Bodenfläche, siehe Fig. 3, eine Schirmfläche 7 bildet, die einer von der Schalenform umgebenen, nicht dargestellten Wärmequelle zugewandt ist.

Die sich in einer Längsrichtung der Schalenform erstreckenden, die seitliche Begrenzung der Schalenform bildenden Seitenränder 9 verlaufen geradlinig und zueinander parallel. Die in der Zeichnung von Fig. 3 linksseitig gelegenen Enden der Seitenränder 9 sind durch einen zu einem Endrand 11 hin schrägverlaufenden Bodenabschnitt 13 miteinander verbunden. Am entgegengesetzten Ende 15 des Formteiles 3 ist die Schalenform teilweise durch senkrecht zur Bodenfläche verlaufende Wandteile 17 teilweise abgeschlossen, die, siehe Fig. 1, unregelmäßig in Anpassung an angrenzende Bauteile geformt sind.

Das zweite Formteil 5 ist durch geeignete Vernietung an Befestigungsstellen, an denen nicht näher dargestellte Distanzhöcker ausgeprägt sind und von denen lediglich Nietstellen 19 in Fig. 2 angedeutet sind, in der Weise mit dem ersten Formteil 3 fest verbunden, dass zwischen erstem Formteil 3 und zweiten Formteil 5 ein Abstandsraum 21 (Fig. 3) gebildet ist. Das zweite Formteil 5 bildet somit eine zweite Schirmfläche 23, die unter Bildung eines zwischenliegenden Luftraumes in einem Abstand von der durch die Bodenfläche gebildeten Schirmfläche 7 des ersten Formteiles 3 verläuft.

Wie insbesondere aus Fig. 3 zu ersehen ist, ist die zu den Schirmflächen 7 und 23 gebildete lichte Weite des Abstandsraumes 21 örtlich unterschiedlich groß. Genauer gesagt hat der Abstandsraum 21 an dem dem Ende 15 benachbarten Anfangsbereich des zweiten Formteiles 5 den Größtwert. Dieser Anfangsbereich des zweiten Formteiles 5 befindet sich, bezogen auf die Längsrichtung, in einem Abstand vom äußeren Ende 15 des ersten Formteiles 3, d.h. das zweite Formteil 5 besitzt eine geringere Länge als das erste Formteil 3. Wie aus Fig. 2 und 3 entnehmbar ist, endet das zweite Formteil 5 mit seinem gegenüberliegenden Ende 25 auch in einem Abstand vom Endrand 11 des ersten Formteiles 3. Wie ebenfalls aus Fig. 3 zu ersehen ist, verringert sich die lichte Weite des Abstandsraumes 21, ausgehend von dem Größtwert an dem in Fig. 3 rechtsseitigen Ende, entlang des parallel zu den Seitenrändern verlaufenden Abschnittes des Bodenteiles und verläuft sodann mit gleichbleibender Weite entlang eines geneigten Abschnittes 27 und eines stärker abgewinkelten Endabschnittes 29 bis zum Ende 25, wobei die lichte Weite in den Abschnitten 27 und 29 sowie am Ende 25 den Kleinstwert besitzt.

Wie aus Fig. 1 und 2 zu entnehmen ist, erstreckt sich das zweite Formteil 5 über die gesamte Breite des ersten Formteiles 3 von Seitenrand 9 zu Seitenrand 9. An letzteren sind beide Formteile 3 und 5 miteinander und mit je einer Befestigungsleiste 31 vernietet oder verschweißt. Wie insbesondere der Querschnitt nach der Fig.3 zeigt, begrenzen in Blickrichtung auf die genannte Figur gesehen die beiden Formteile 3,5 im linken Bereich entlang einer Schräge einen im wesentlichen konstanten Lüftungsspalt als geringste lichte Spaltweite, die in einen erweiternden horizontalen Bereich übergeht, wobei die waagerechte Horizontlinie in der gezeigten Grundlage des Abschirmbauteils bis zu seinem rechten Endbereich diese horizontale Begrenzungsfläche beibehält, wohingegen das darüberliegende Formteil 5 sich zunächst im Übergangsbereich tütenartig erweitert, um anschließend mit einem geringeren Ansteigeverlauf in das Ende mit der größten lichten Spaltweite für den Abstandsraum 21 überzugehen.

Gerade dieser Formverlauf mit im Querschnitt gesehen über eine gewisse Wegstrecke konstant und dann unterschiedlich verlaufenden Abstandsraumbereichen hat sich für die erwünschte Durchlüftung mit optimierter Wärmeabfuhr als günstig erwiesen. Der dahingehend im Querschnitt gesehene Spaltlinienverlauf mit unterschiedlichen lichten Weiten des Abstandsraumes, der insoweit, wie dargestellt, medien- und insbesondere luftführend in die Umgebung ausmündet, hat sich insoweit auch ausgesprochen günstig erwiesen, sofern es um die Dämmung und Schallabsorption von unerwünschtem Schall (Lärm) geht. Zur Unterstützung des genannten Durchgangseffektes sind, wie bereits dargelegt, die beiden Formteile entlang ihrer parallel verlaufenden Längsränder 9 mediendicht und fest miteinander verbunden.

Aus Fig. 1 und 2 ist auch entnehmbar, dass in beiden Formteilen 3, 5 miteinander fluchtende Öffnungen 33 bzw. 35 ausgebildet sind, die für Zusatzeinrichtungen, wie Lambdasonden oder dergleichen, einen Zugang zu dem im Schaleninneren befindlichen Abgaskrümmer ermöglichen.

Wie bereits erwähnt, bildet beim hier beschriebenen Ausführungsbeispiel das zweite Formteil 5 in Verbindung mit dem ersten Formteil 3 eine nahezu vollflächige Verdoppelung der dem abzuschirmenden Bauteil zugewandten Schirmflächen 7 und 23. Bei nur örtlich besonders hoher thermischer Belastung könnte das zweite Formteil 5 so gestaltet sein, dass es sich nur über einen interessierenden Teilflächenbereich erstreckt, in dem ein entsprechender Abstandsraum gebildet wird.

## Patentansprüche

1. Strukturbauteil, insbesondere Abschirmteil in Form eines Hitzeschildes, mit einem Schirmkörper (1), der ein Formteil (3) aufweist, das eine Schirmfläche (7) bildet, die ein abzuschirmendes Bauteil zumindest teilweise umgibt, wobei der Schirmkörper (1) ein zweites Formteil (5) aufweist, das eine weitere Schirmfläche (23) bildet, wobei beide Formteile (3,5) jeweils die Form einer flachen Schale haben, die mindestens einen Abstandsraum (21) mit vorgebbaren lichten Weiten begrenzen, wobei die beiden Formteile (3,5) entlang ihrer zueinander parallel verlaufenden, sich in einer Längsrichtung erstreckenden Seitenränder (9) mediendicht und fest miteinander verbunden sind, **dadurch gekennzeichnet, dass** zumindest teilweise im Bereich der von einander beabstandeten Enden (15, 25) der Formteile (3,5) die jeweilige lichte Weite des Abstandsraumes (21) unterschiedlich ist, der insoweit in die Umgebung des Strukturbauteils ausmündet.

2. Strukturbauteil nach Anspruch 1, **dadurch gekennzeichnet, dass** sich die Schirmfläche (23) des zweiten Formteiles (5) im wesentlichen über den gesamten Flächenbereich der Schirmfläche (7) des ersten Formteiles (3) erstreckt.

3. Strukturbauteil nach Anspruch 1 oder 2, **dadurch gekennzeichnet, dass** sich die Schirmfläche (23) des zweiten Formteiles (5) über einen besonders hoch belasteten Teilflächenbereich der Schirmfläche (7) des ersten Formteiles (3) erstreckt.

4. Strukturbauteil nach einem der Ansprüche 1 bis 3, **dadurch gekennzeichnet, dass** die in der zu den Schirmflächen (7, 23) normalen Richtung gemessene lichte Weite des Abstandsraumes (21) in unterschiedlichen Flächenbereichen unterschiedlich groß bemessen ist.

5. Strukturbauteil nach Anspruch 4, **dadurch gekennzeichnet, dass** die lichten Weiten des Abstandsraumes (21) im Bereich von 2,5 bis 5 mm liegen.

6. Strukturbauteil nach einem der Ansprüche 1 bis 5, **dadurch gekennzeichnet, dass** das die größere Schirmfläche (7) bildende erste Formteil (3) als das dem abzuschirmenden Bauteil näherliegende Formteil vorgesehen ist.

7. Strukturbauteil nach einem der Ansprüche 1 bis 6, **dadurch gekennzeichnet, dass** das erste Formteil (3) in Form der flachen Schale eine Längserstreckung aufweist mit zwei parallelen, längsverlaufenden Seitenrändern (9), einem diese an einem Ende verbindenden Endrand (11) und mit zu diesem Endrand entgegengesetzt angeordneten Wandteilen (17).

8. Strukturbauteil nach Anspruch 7, **dadurch gekennzeichnet, dass** die Wandteile (17) zur Bodenfläche der Schale in Form des Formteils (3) im wesentlichen senkrecht stehen.

9. Strukturbauteil nach Anspruch 7 oder 8, **dadurch gekennzeichnet, dass** das zweite Formteil (5) das erste Formteil (3) von Seitenrand (9) zu Seitenrand (9) durchgehend übergreift.

10. Strukturbauteil nach einem der Ansprüche 7 bis 9, **dadurch gekennzeichnet, dass** die Längserstreckung des zweiten Formteiles (5) geringer ist als diejenige des ersten Formteiles (3) und dass das zweite Formteil (5) am ersten Formteil (3) so angebracht ist, dass dieses im Bereich des Endrandes (11) und des dazu entgegengesetzten Endes (15) frei liegt.

11. Strukturbauteil nach einem der Ansprüche 7 bis 10, **dadurch gekennzeichnet, dass** die lichte Weite des Abstandsraumes (21) an demjenigen Ende den Größtwert besitzt, welches dem die senkrechten Wandteile (17) aufweisenden Ende (15) des ersten Formteiles (3) benachbart ist.

12. Strukturbauteil nach Anspruch 11, **dadurch gekennzeichnet, dass** die lichte Weite des Abstandsraumes (21) in Richtung auf dessen dem Endrand (11) des ersten Formteiles (3) benachbartes Ende hin abnimmt und an diesem Ende durchgängig den Kleinstwert besitzt.

13. Strukturbauteil nach einem der Ansprüche 1 bis 12, **dadurch gekennzeichnet, dass** erstes (3) und zweites Formteil (3) miteinander fluchtende Öffnungen (33 bzw. 35) zur Bildung eines Zugangs für Zusatzeinrichtungen, beispielsweise Lambdasonden, zum abzuschirmenden Bauteil aufweist.

## Claims

1. A structural component, in particular a shielding element in the form of a heat shield, with a shielding body (1), which has a molded part (3) that forms a shielding surface (7), which at least partially surrounds a component to be shielded; the shielding body (1) has a second molded part (5) that forms another shielding surface (23); the two molded parts (3, 5) are each embodied in the form of a flat dish and delimit at least one spacing chamber (21) with predefinable clearances; and the two molded parts (3, 5), along their lateral edges (9) that are parallel to each other and extend in a longitudinal direction, are attached to each other in a firm, media-tight way, **characterized in that** the respective clearance of the spacing chamber (21), which feeds into the surroundings of the structural component, varies in at least some parts in the region of the spaced-apart ends (15, 25) of the molded parts (3, 5).

2. The structural component according to claim 1, **characterized in that** the shielding surface (23) of the second molded part (5) extends essentially across the entire flat region of the shielding surface (7) of the first molded part (3).

3. The structural component according to claim 1 or 2, **characterized in that** the shielding surface (23) of the second molded part (5) extends across a particularly highly stressed subregion of the shielding surface (7) of the first molded part (3).

4. The structural component according to one of claims 1 to 3, **characterized in that** the clearance of the spacing chamber (21) measured in the direction oriented normal to the shielding surfaces (7, 23) is of different dimensions in different regions of the surface.

5. The structural component according to claim 4, **characterized in that** the clearances of the spacing chamber (21) lie in the range from 2.5 to 5 mm.

6. The structural component according to one of claims 1 to 5, **characterized in that** the first molded part (3) that forms the larger shielding surface (7) is provided as the molded part situated closer to the component to be shielded.

7. The structural component according to one of claims 1 to 6, **characterized in that** the first molded part (3) in the form of a flat dish has a longitudinal span with two parallel, longitudinally extending lateral edges (9), a terminal edge (11) that connects these two lateral edges at the end, and wall sections (17) that are situated opposite from this terminal edge.

8. The structural component according to claim 7, **characterized in that** the wall sections (17) extend essentially perpendicular to the bottom surface of the dish in the form of the molded part (3).

9. The structural component according to claim 7 or 8, **characterized in that** the second molded part (5) continuously overlaps the first molded part (3) from lateral edge (9) to lateral edge (9).

10. The structural component according to one of claims 7 to 9, **characterized in that** the longitudinal span of the second molded part (5) is less than that of the first molded part (3) and the second molded part (5) is attached to the first molded part (3) so that the latter is uncovered in the region of the terminal edge (11) and in the region of the end (15) opposite from this terminal edge.

11. The structural component according to one of claims 7 to 10, **characterized in that** the clearance of the spacing chamber (21) has its greatest value at the end adjacent to the end (15) of the first molded part (3) that has the perpendicular wall sections (17).

12. The structural component according to claim 11, **characterized in that** the clearance of the spacing chamber (21) decreases in the direction toward its end adjacent to the terminal edge (11) of the first molded part (3) and at this end, continuously has the minimum value.

13. The structural component according to one of claims 1 to 12, **characterized in that** the first molded part (3) and second molded part (5) have openings (33 and 35, respectively) that are aligned with one another, to provide an access to the component to be shielded for additional devices such as lambda probes.

## Revendications

1. Composant de structure, en particulier élément de blindage sous la forme d'un bouclier thermique, comportant un corps de blindage (1) qui comprend une pièce moulée (3) qui constitue une surface de blindage (7) qui entoure au moins partiellement un composant à blinder, le corps de blindage (1) comprenant une seconde pièce moulée (5) qui constitue une autre surface de blindage (23), les deux pièces moulées (3, 5) présentant chacune la forme d'une coupelle peu profonde, qui délimitent au moins un espacement (21) présentant des largeurs apparentes à prédéterminer, les deux pièces moulées (3, 5) étant reliées entre elles solidairement et de façon étanche aux fluides le long de leurs bords latéraux (9) parallèles l'un à l'autre et s'étendant dans une direction longitudinale, **caractérisé en ce qu'**au niveau des extrémités écartées l'une de l'autre (15, 25) des pièces moulées (3, 5) les largeurs apparentes respectives de l'espacement (21) se distinguent l'une de l'autre au moins partiellement, espacement qui, dans cette mesure, débouche au voisinage du composant de structure.

2. Composant de structure selon la revendication 1, **caractérisé en ce que** la surface de blindage (23) de la seconde pièce moulée (5) s'étend sensiblement sur toute la zone surfacique de la surface de blindage (7) de la première pièce moulée (3).

3. Composant de structure selon la revendication 1 ou 2, **caractérisé en ce que** la surface de blindage (23) de la seconde pièce moulée (5) s'étend sur une zone surfacique partielle, soumise à une charge particulièrement élevée, de la surface de blindage (7) de la première pièce moulée (3).

4. Composant de structure selon l'une des revendications 1 à 3, **caractérisé en ce que** la largeur apparente de l'espacement (21) mesurée dans la direction normale aux surfaces de blindage (7, 23) présente différentes dimensions dans les zones surfaciques distinctes.

5. Composant de structure selon la revendication 4, **caractérisé en ce que** les largeurs apparentes de l'espacement (21) sont dans la plage comprise entre 2,5 et 5 mm.

6. Composant de structure selon l'une des revendications 1 à 5, **caractérisé en ce que** la première pièce moulée (3) constituant la surface de blindage (7) la plus grande est prévue comme étant la pièce moulée située plus près du composant à blinder.

7. Composant de structure selon l'une des revendications 1 à 6, **caractérisé en ce que** la première pièce moulée (3) sous la forme de la coupelle peu profonde présente une extension longitudinale avec deux bords latéraux (9) longitudinaux parallèles, un bord d'extrémité (11) reliant ceux-ci à une extrémité et des éléments formant paroi (17) agencés à l'opposé dudit bord d'extrémité.

8. Composant de structure selon la revendication 7, **caractérisé en ce que** les éléments formant paroi (17) sont sensiblement perpendiculaires à la surface de fond de la coupelle sous la forme de la pièce moulée (3).

9. Composant de structure selon la revendication 7 ou 8, **caractérisé en ce que** la seconde pièce moulée (5) coiffe la première pièce moulée (3) en continu depuis un bord latéral (9) jusqu'à l'autre bord latéral (9).

10. Composant de structure selon l'une des revendications 7 à 9, **caractérisé en ce que** l'extension longitudinale de la seconde pièce moulée (5) est inférieure à celle de la première pièce moulée (3), et **en ce que** la seconde pièce moulée (5) est montée sur la première pièce moulée (3) de telle sorte que celle-ci est à découvert dans la zone du bord d'extrémité (11) et de l'extrémité (15) opposée à celui-ci.

11. Composant de structure selon l'une des revendications 7 à 10, **caractérisé en ce que** la largeur apparente de l'espacement (21) présente la valeur maximale à cette extrémité qui avoisine l'extrémité (15) de la première pièce moulée (3) présentant les éléments formant paroi (17) perpendiculaires.

12. Composant de structure selon la revendication 11, **caractérisé en ce que** la largeur apparente de l'espacement (21) décroît en direction de son extrémité voisine du bord d'extrémité (11) de la première pièce moulée (3) et possède en continu la valeur minimale à cette extrémité.

13. Composant de structure selon l'une des revendications 1 à 12, **caractérisé en ce que** la première (3) et la seconde pièce moulée (3) présentent des ouvertures (33 ou 35) en alignement l'une avec l'autre pour former un accès au composant à blinder pour des accessoires, par exemple des sondes lambda.
